# EUROPEAN PATENT APPLICATION

(11) **EP 4 742 688 A1**
(43) Date of publication of application: **13.05.2026**
(21) Application number: 24863031.1
(22) Date of filing: 01.08.2024
(51) Int. Cl.: H04N 23/57, H04N 23/55, H04N 23/54, H04N 23/51

(54) **CAMERA MODULE COMPRISING BAFFLE AND ELECTRONIC DEVICE COMPRISING SAME**

(30) Priority: 04.09.2023 KR 20230116776; 02.11.2023 KR 20230149601
(71) Applicant: Samsung Electronics Co., Ltd., Suwon-si, Gyeonggi-do 16677 (KR)
(72) Inventor: JO, Jiyeon, Suwon-si Gyeonggi-do 16677 (KR); SHIN, Jeongkil, Suwon-si Gyeonggi-do 16677 (KR)
(74) Representative: HGF
(86) International application number: PCT/KR2024/011357
(87) International publication number: WO 2025/053449

(57) **Abstract**

This camera module may comprise: a housing; a lens carrier configured to carry a lens along the optical axis of the lens; an image sensor configured to receive light passing through the lens; a first baffle arranged on one portion of the lens carrier; and a second baffle arranged parallel to the first baffle and arranged in an inner portion of the housing between the lens and the image sensor.

## Description

### Technical Field

The disclosure generally relates to a camera module, for example, to a camera module including a baffle. The disclosure also relates to an electronic device including the camera module.

### Background Art

Technologies have been developed to reduce phenomena, such as ghost, flare, or glare that may affect the image quality of an image in a camera module.

Said related art is information the inventor(s) acquired during the course of conceiving the disclosure, or already possessed at the time, and is not necessarily the prior art publicly known before the disclosure was filed.

### DISCLOSURE OF THE INVENTION

### Technical Solutions

In accordance with an aspect of the disclosure, a camera module is provided. The camera module includes a housing, a lens carrier configured to move a lens along an optical axis of the lens, an image sensor configured to receive light passing through the lens, a first baffle disposed on a portion of the lens carrier, and a second baffle disposed parallel to the first baffle and disposed on an inner portion of the housing between the lens and the image sensor.

In accordance with another aspect of the disclosure, an electronic device is provided. The electronic device includes a camera module, wherein the camera module includes a housing, a lens carrier configured to move a lens along an optical axis of the lens, an image sensor configured to receive light passing through the lens, a first baffle disposed on a portion of the lens carrier, and a second baffle disposed parallel to the first baffle and disposed on an inner portion of the housing between the lens and the image sensor.

### BRIEF DESCRIPTION OF THE DRAWINGS

The above and other aspects, features, and advantages of certain embodiments of the disclosure will be more apparent from the following description with the accompanying drawings, in which:
FIG. 1 is a block diagram illustrating an electronic device in a network environment according to an embodiment of the disclosure;
FIG. 2 is a block diagram illustrating a camera module according to an embodiment of the disclosure;
FIG. 3 is a perspective view of an electronic device in one direction according to an embodiment of the disclosure;
FIG. 4 is a perspective view of an electronic device in another direction according to an embodiment of the disclosure;
FIG. 5 is a perspective view of a camera module according to an embodiment of the disclosure;
FIG. 6 is a plan view of a camera module according to an embodiment of the disclosure;
FIG. 7 is an exploded perspective view of a camera module according to an embodiment of the disclosure;
FIG. 8A is a plan view of a camera module including an AF carrier in a first position with a camera cover removed according to an embodiment of the disclosure;
FIG. 8B is a plan view of a camera module including an AF carrier in a second position with a camera cover removed according to an embodiment of the disclosure;
FIG. 9A is a cross-sectional view of a camera module taken along line 9-9 of FIG. 6 according to an embodiment of the disclosure;
FIG. 9B is an enlarged view of a first wall illustrating portion 9B of FIG. 9A according to an embodiment of the disclosure;
FIG. 9C is an enlarged view of a second wall illustrating portion 9C of FIG. 9A according to an embodiment of the disclosure;
FIG. 10A is a plan view of a camera module according to an embodiment of the disclosure;
FIG. 10B is a bottom view of a baffle according to an embodiment of the disclosure;
FIG. 10C is an enlarged view of portion 10C of the baffle of FIG. 10B according to an embodiment of the disclosure;
FIG. 11 is a cross-sectional view of a camera module according to an embodiment of the disclosure;
FIG. 12 is a cross-sectional view of a camera module according to an embodiment of the disclosure;
FIG. 13 is a perspective view of a carrier in a camera module according to an embodiment of the disclosure;
FIG. 14 is a perspective view of a carrier in a camera module according to an embodiment of the disclosure;
FIG. 15 is a perspective view of a carrier in a camera module according to an embodiment of the disclosure;
FIG. 16 is a cross-sectional view of a camera module according to an embodiment of the disclosure;
FIG. 17 is a cross-sectional view of a camera module according to an embodiment of the disclosure;
FIG. 18 is a cross-sectional view of a baffle according to an embodiment of the disclosure; and
FIG. 19 is a cross-sectional view of a baffle according to an embodiment of the disclosure.

### DETAILED DESCRIPTION

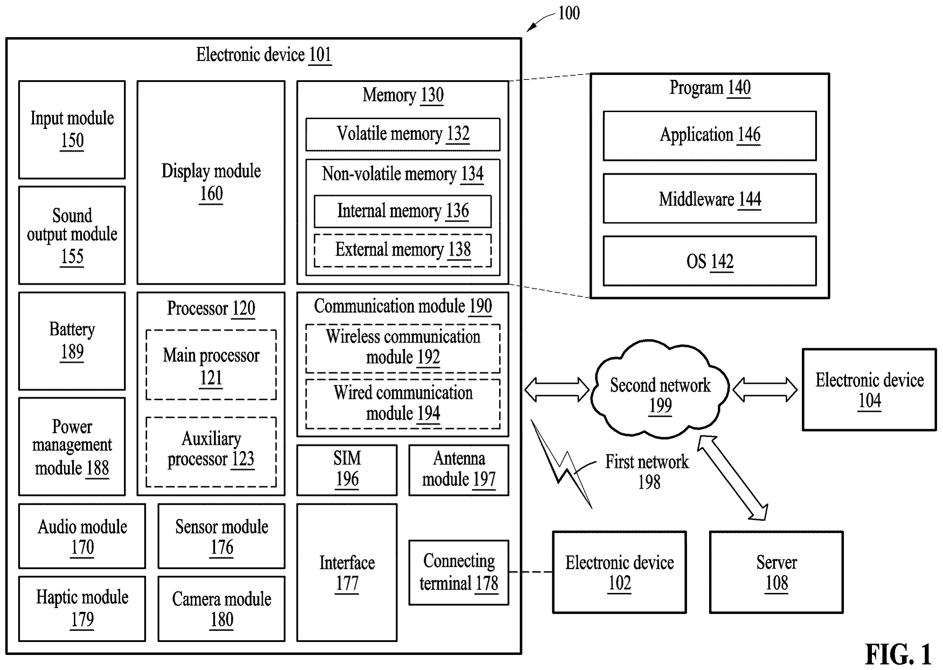

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some examples, at least one (e.g., the connecting terminal 178) of the above components may be omitted from the electronic device 101, or one or more other components may be added to the electronic device 101. In some examples, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment of the disclosure, as at least a part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101 instead of the main processor 121 while the main processor 121 is in an inactive (e.g., a sleep) state or along with the main processor 121 while the main processor 121 is an active state (e.g., executing an application). According to an embodiment of the disclosure, the auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., an NPU) may include a hardware structure specified for artificial intelligence (AI) model processing. An AI model may be generated by machine learning. The machine learning may be performed by, for example, the electronic device 101, in which AI is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but examples are not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment of the disclosure, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an embodiment of the disclosure, the display module 160 may include a touch sensor adapted to detect a touch or a pressure sensor adapted to measure the intensity of a force incurred by the touch.

The audio module 170 may convert a sound into an electric signal or vice versa. According to an embodiment of the disclosure, the audio module 170 may obtain the sound via the input module 150 or output the sound via the sound output module 155 or an external electronic device (e.g., the external electronic device 102, such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and may generate an electric signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the external electronic device 102) directly (e.g., by wire) or wirelessly. According to an example embodiment of the disclosure, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the external electronic device 102). According to an example embodiment of the disclosure, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus, which may be recognized by a user via their tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, ISPs, or flashes.

The power management module 188 may manage power supplied to the electronic device 101. According to an embodiment of the disclosure, the power management module 188 may be implemented as, for example, at least a part of a power management integrated circuit (PMIC).

The battery 189 may supply power to at least one component of the electronic device 101. According to an embodiment of the disclosure of the disclosure, the battery 189 may include, for example, a primary cell that is not rechargeable, a secondary cell that is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth-generation (5G) network, a next-generation communication network, the Internet, or a computer network (e.g., a LAN or a wide area network (WAN)). These various types of communication modules may be implemented as a single component (e.g., a single chip) or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, for example, a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element including a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment of the disclosure, another component (e.g., a radio frequency integrated circuit (RFIC)) other than the radiating element may be additionally formed as a portion of the antenna module 197.

According to an embodiment of the disclosure, the antenna module 197 may form a mmWave antenna module. According to an embodiment of the disclosure, the mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices (e.g., the external electronic device 102 or 104) may be a device of the same type as or a different type from the electronic device 101. According to an embodiment of the disclosure, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra-low-latency services using, e.g., distributed computing or mobile edge computing. In an embodiment of the disclosure, the external electronic device 104 may include an Internet-of-Things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to the embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms, such as "first", "second", or "first" or "second" may simply be used to distinguish the component from other components in question and may refer to components in other aspects (e.g., importance or order) is not limited. It is to be understood that if an element (e.g., a first element) is referred to, with or without the term "operatively" or "communicatively," as "coupled with," "coupled to," "connected with," or "connected to" another element (e.g., a second element), the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to embodiments disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments of the disclosure, each component (e.g., a module or a program) of the above-described components may include a single entity or multiple entities, and some of the multiple entities may be separately disposed in different components. According to embodiments of the disclosure, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments of the disclosure, operations performed by the module, the program, or another component may be carried out sequentially, in parallel, repeatedly, or heuristically, or one or more of the operations may be executed in a different order or omitted, or one or more other operations may be added.

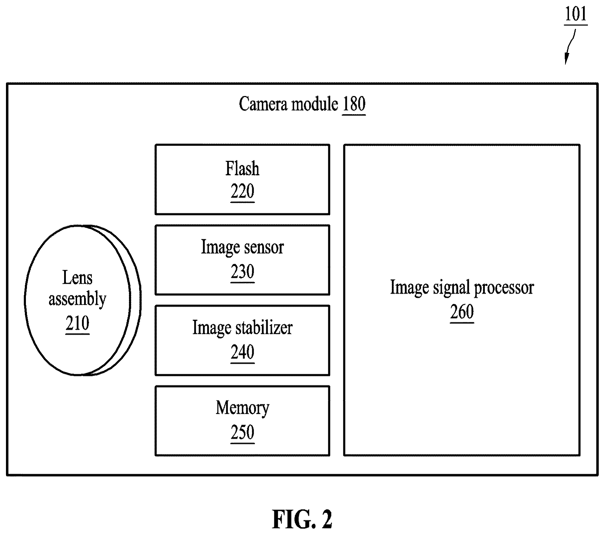

FIG. 2 is a block diagram illustrating a camera module according to an embodiment of the disclosure.

Referring to FIG. 2, the camera module 180 may include a lens assembly 210, a flash 220, an image sensor 230, an image stabilizer 240, memory 250 (e.g., buffer memory), or an ISP 260. The lens assembly 210 may collect light emitted from an object, which is a target from which an image is to be captured. The lens assembly 210 may include one or more lenses. According to an embodiment of the disclosure, the camera module 180 may include a plurality of lens assemblies 210. In this case, the camera module 180 may be included in, for example, a dual camera, a 360-degree camera, or a spherical camera. Some of the lens assemblies 210 may have the same lens properties (e.g., an angle of view, a focal length, an auto focus, an f number, or an optical zoom), or at least one lens assembly may have one or more lens properties that are different from those of another lens assembly. The lens assembly 210 may include, for example, a wide-angle lens or a telephoto lens.

The flash 220 may emit light to be used to enhance light emitted or reflected from the object. According to an embodiment of the disclosure, the flash 220 may include one or more light emitting diodes (LEDs) (e.g., a red-green-blue (RGB) LED, a white LED, an infrared (IR) LED, or an ultraviolet (UV) LED), or a xenon lamp. The image sensor 230 may obtain an image corresponding to the object by converting light emitted or reflected from the object and transmitted through the lens assembly 210 into an electrical signal. According to an embodiment of the disclosure, the image sensor 230 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 230 may be implemented using, for example, a charged coupled device (CCD) sensor or a complementary metal-oxide-semiconductor (CMOS) sensor.

The image stabilizer 240 may move at least one lens included in the lens assembly 210 or the image sensor 230 in a specific direction, or control an operation characteristic (e.g., adjust the read-out timing) of the image sensor 230, in response to a movement of the camera module 180 or the electronic device 101 including the camera module 180. This allows compensating for at least part of a negative effect by the movement on an image being captured. According to an embodiment of the disclosure, the image stabilizer 240 may detect such a movement by the camera module 180 or the electronic device 101 using a gyro sensor (not shown) or an acceleration sensor (not shown) disposed inside or outside the camera module 180. According to an embodiment of the disclosure, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Subsequently, when a specified condition (e.g., a user input or a system command) is satisfied, at least a portion of the original image stored in the memory 250 may be obtained and processed by, for example, the ISP 260. According to an embodiment of the disclosure, the memory 250 may be configured as at least part of the memory 130 or as separate memory that is operated independently from the memory 130.

The ISP 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the ISP 260 may perform control (e.g., exposure time control or read-out timing control) with respect to at least one (e.g., the image sensor 230) of the components included in the camera module 180. An image processed by the ISP 260 may be stored back in the memory 250 for further processing or may be provided to an external component (e.g., the memory 130, the display module 160, the external electronic device 102, the external electronic device 104, or the server 108) outside the camera module 180. According to an embodiment of the disclosure, the ISP 260 may be configured as at least part of the processor 120, or as a separate processor operated independently from the processor 120. If the ISP 260 is configured as a separate processor from the processor 120, at least one image processed by the ISP 260 may be displayed, by the processor 120, via the display module 160 as it is or after being further processed.

According to an embodiment of the disclosure, the electronic device 101 may include a plurality of camera modules 180 having different attributes or functions. In this case, for example, at least one of the plurality of camera modules 180 may be a wide-angle camera, and at least another one of the plurality of camera modules 180 may be a telephoto camera. Similarly, at least one of the plurality of camera modules 180 may form, for example, a front camera and at least another of the plurality of camera modules 180 may form a rear camera.

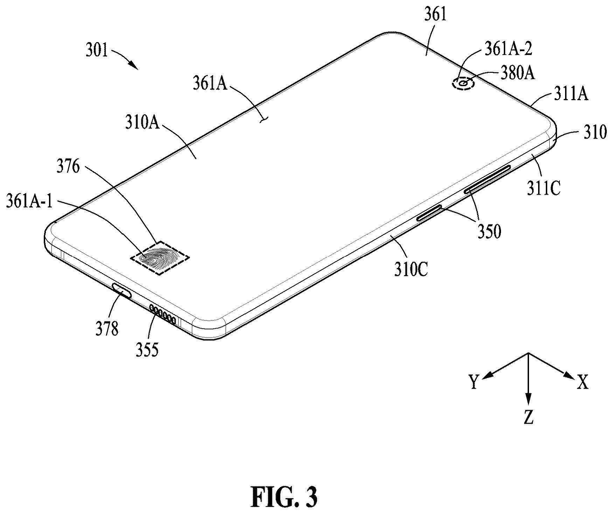

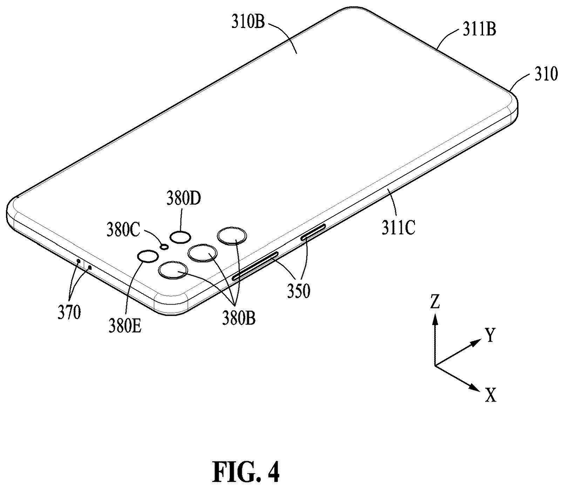

FIG. 3 is a perspective view of an electronic device in one direction according to an embodiment of the disclosure. FIG. 4 is a perspective view of an electronic device in another direction according to an embodiment of the disclosure.

Referring to FIGS. 3 and 4, an electronic device 301 (e.g., the electronic device 101 of FIG. 1) may include a housing 310 including a first surface 310A (e.g., a front surface), a second surface 310B (e.g., a rear surface), and a third surface 310C (e.g., a side surface) enclosing a space between the first surface 310A and the second surface 310B. The first surface 310A may be formed by a first plate 311A of which at least a portion is substantially transparent. For example, the first plate 311A may include a polymer plate or a glass plate including at least one coating layer. The second surface 310B may be formed by a second plate 311B that is substantially opaque. For example, the second plate 311B may be formed of coated or tinted glass, ceramic, polymer, metal (e.g., aluminum, stainless steel (STS), or magnesium), or a combination thereof. The third surface 310C may be formed by a frame 311C that is coupled to the first plate 311A and the second plate 311B and includes a metal and/or a polymer. The second plate 311b and the frame 311c may be integrally and seamlessly formed. The second plate 311B and the frame 311C may be formed of substantially the same material (e.g., aluminum).

The electronic device 301 may include an input module 350 (e.g., the input module 150 of FIG. 1). The input module 350 may be disposed on the third surface 310C. The input module 350 may include at least one key input device. For example, the key input device may include one or more mechanical actuators (e.g., buttons), one or more capacitors, and/or one or more inductors.

The electronic device 301 may include a sound output module 355 (e.g., the sound output module 155 of FIG. 1). The sound output module 355 may be disposed on the third surface 310C. The sound output module 355 may include one or more holes.

The electronic device 301 may include a display module 361 (e.g., the display module 160 of FIG. 1). The display module 361 may be disposed on the first surface 310A. The display module 361 may be visible through at least a portion of the first plate 311A. The display module 361 may have a shape that is substantially the same as the shape of an outer edge of the first plate 311A. The periphery of the display module 361 may substantially coincide with the outer edge of the first plate 311A. The display module 361 may include a touch sensing circuit, a pressure sensor for measuring an intensity (pressure) of a touch, and/or a digitizer for detecting a magnetic-type stylus pen. The display module 361 may include a screen display area 361A that is visually exposed to display content using pixels. The screen display area 361A may include a sensing area 361A-1. The sensing area 361A-1 may overlap at least one area of the screen display area 361A. The sensing area 361A-1 may allow transmission of an input signal related to a sensor module 376 (e.g., the sensor module 176 of FIG. 1). The sensing area 361A-1 may display content, like the screen display area 361A that does not overlap the sensing area 361A-1. For example, the sensing area 361A-1 may display the content while the sensor module 376 is not operating. At least a portion of a camera area 361A-2 may overlap the screen display area 361A. The screen display area 361A may include the camera area 361A-2. The camera area 361A-2 may allow transmission of an optical signal related to a first camera module 380A (e.g., the camera module 180 of FIG. 1 and/or the camera module 180 of FIG. 2). At least a portion of the camera area 361A-2, that overlaps the screen display area 361A, may display content, similarly to the screen display area 361A that does not overlap the camera area 361A-2. For example, the camera area 361A-2 may display the content while the first camera module 380A is not operating.

The electronic device 301 may include an audio module 370 (e.g., the audio module 170 of FIG. 1). The audio module 370 may be disposed on the third surface 310C. The audio module 370 may obtain a sound through at least one hole.

The electronic device 301 may include the sensor module 376. The sensor module 376 may be disposed on the first surface 310A. The sensor module 376 may form the sensing area 361A-1 in at least a portion of the screen display area 361A. The sensor module 376 may receive an input signal transmitted through the sensing area 361A-1 and generate an electrical signal based on the received input signal. For example, the input signal may have a designated physical quantity (e.g., heat, light, temperature, sound, pressure, or ultrasound). The input signal may include a signal related to biometric information (e.g., a fingerprint) of a user.

The electronic device 301 may include a connecting terminal 378 (e.g., the connecting terminal 178 of FIG. 1). The connecting terminal 378 may be disposed on the third surface 310C. For example, when the electronic device 301 is viewed in one direction (e.g., the -Y direction), the connecting terminal 378 may be positioned substantially in a central portion of the third surface 310C, and the sound output module 355 may be positioned on one side (e.g., the right side) with respect to the connecting terminal 378.

The electronic device 301 may include the first camera module 380A (e.g., the camera module 180 of FIG. 1 and/or the camera module 180 of FIG. 2). The first camera module 380A may be disposed on the first surface 310A. At least a portion of the first camera module 380A may be disposed under the display module 361. The first camera module 380A may receive an optical signal transmitted through the camera area 361A-2.

The electronic device 301 may include a plurality of second camera modules 380B (e.g., the camera module 180 of FIG. 1 and/or the camera module 180 of FIG. 2). The plurality of second camera modules 380B may be disposed on the second surface 310B. The plurality of second camera modules 380B may be arranged in a first row in one direction (e.g., a Y-axis direction) of the second plate 311B. The plurality of second camera modules 380B may have different fields of view. For example, the plurality of second camera modules 380B may include an ultra-wide-angle camera, a wide-angle camera, and/or a telephoto camera.

The electronic device 301 may include a light module 380C (e.g., the flash 220 of FIG. 2). The light module 380C may be arranged in a second row substantially parallel to the first row of the plurality of second camera modules 380B on the second surface 310B. The light module 380C may include one or more light-emitting diodes or xenon lamps. The light module 380C may include a sensor configured to detect external light. For example, the sensor may include a flicker sensor.

The electronic device 301 may include a third camera module 380D. The pixel, magnification, and/or field of view of the third camera module 380D may differ from the pixel, magnification, and/or field of view of at least one second camera module 380B. The third camera module 380D may be arranged in the second row substantially parallel to the first row of the plurality of second camera modules 380B on the second surface 310B.

The electronic device 301 may include a fourth camera module 380E. The fourth camera module 380E, which may also be referred to as a "depth camera" or a "time-of-flight (ToF) camera", may be configured to measure the distance between the fourth camera module 380E and an object. For example, the fourth camera module 380E may be configured to measure the distance using at least one or a combination of an ultrasonic wave, an infrared ray, or a laser. The fourth camera module 380E may be arranged in the second row substantially parallel to the first row of the plurality of second camera modules 380B on the second surface 310B.

Meanwhile, the embodiments set forth herein may also apply to electronic devices of various shapes/forms (e.g., a foldable electronic device, a slidable electronic device, a rollable electronic device, a digital camera, a digital video camera, a tablet personal computer (PC), a laptop computer, and other electronic devices), in addition to the electronic device shown in FIGS. 3 and 4.

As used herein, the terms "substantially", "approximately", "generally", and "about" in reference to a given parameter, attribute, or condition may include a degree that one of ordinary skill in the art would understand that the given parameter, attribute, or condition is met with a small degree of variance, such as within acceptable manufacturing tolerances. For example, a parameter that is substantially met may be at least about 90% met, at least about 95% met, or at least about 99% met.

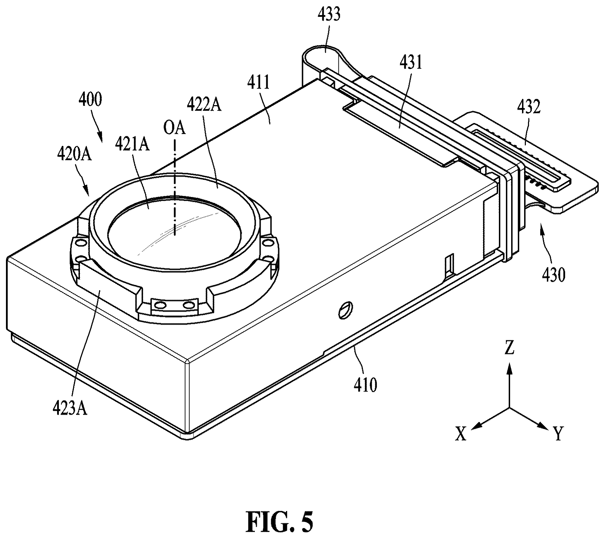

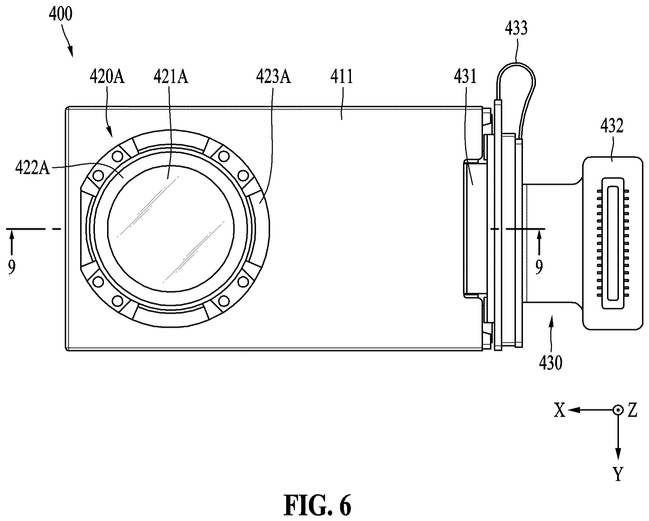

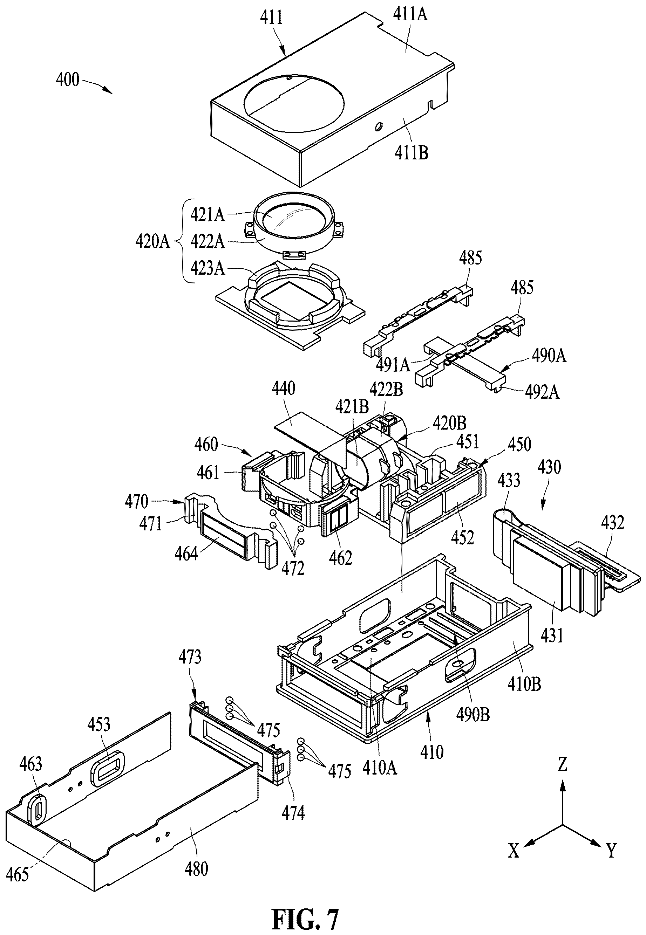

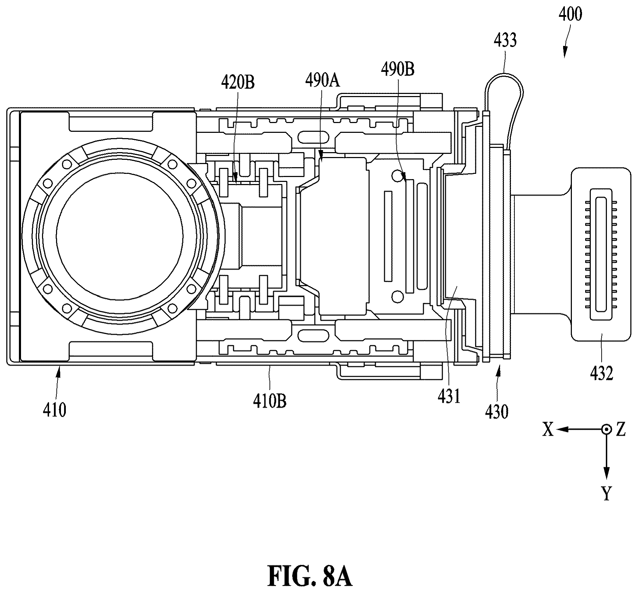

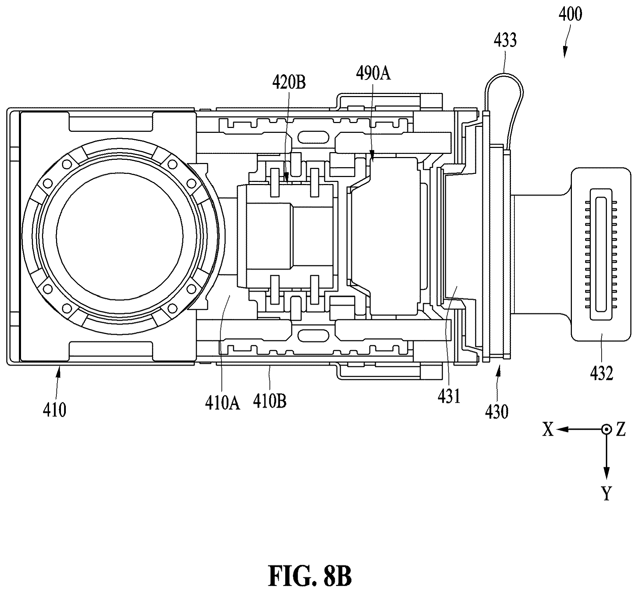

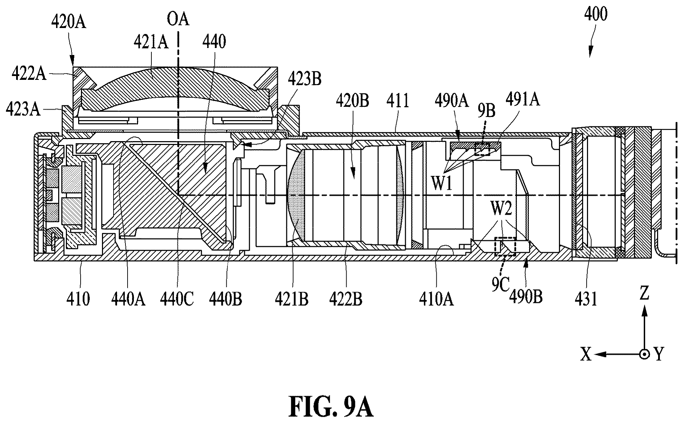

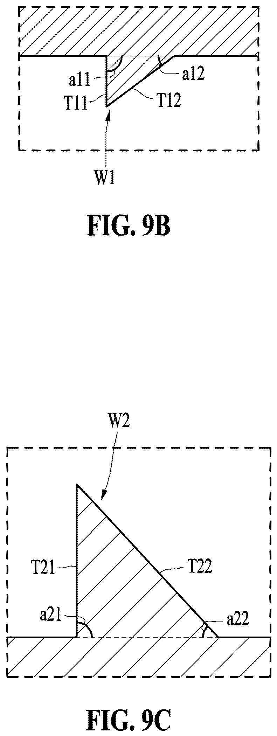

FIG. 5 is a perspective view of a camera module according to an embodiment of the disclosure. FIG. 6 is a plan view of a camera module according to an embodiment of the disclosure. FIG. 7 is an exploded perspective view of a camera module according to an embodiment of the disclosure. FIG. 8A is a plan view of a camera module including an AF carrier in a first position with a camera cover removed according to an embodiment of the disclosure. FIG. 8B is a plan view of a camera module including an AF carrier in a second position with a camera cover removed according to an embodiment of the disclosure. FIG. 9A is a cross-sectional view of a camera module taken along line 9-9 of FIG. 6 according to an embodiment of the disclosure. FIG. 9B is an enlarged view of a first wall illustrating portion 9B of FIG. 9A according to an embodiment of the disclosure. FIG. 9C is an enlarged view of a second wall illustrating portion 9C of FIG. 9A according to an embodiment of the disclosure.

Referring to FIGS. 5, 6, 7, 8A, 8B, 9A, 9B, and 9C, a camera module 400 (e.g., the camera module 180 of FIGS. 1 and 2 and/or the second camera module 380B and/or the third camera module 380D of FIGS. 3 and 4) may include a camera housing 410. The camera housing 410 may be configured to accommodate one or more camera-related components. The camera housing 410 may include a base frame 410A and a plurality of side housing frames 410B connected to the base frame 410A.

The camera module 400 may include a camera cover 411. The camera cover 411, which may also be referred to as a "shield can," may be configured to cover one or more camera-related components accommodated in the camera housing 410. The camera cover 411 may include a top frame 411A and a plurality of side cover frames 411B connected to the top frame 411A.

The camera module 400 may include a first lens assembly 420A (e.g., the lens assembly 210 of FIG. 2). The first lens assembly 420A may include at least one first lens 421A having a defined optical axis OA. A portion of the optical axis OA may be defined as a line connecting the center of curvature of a first surface of at least one first lens 421A and the center of curvature of an Nth surface (N is a natural number). The first lens assembly 420A may include a first lens housing 422A configured to accommodate at least one first lens 421A. The first lens assembly 420A may include a lens holder 423A configured to hold the first lens housing 422A. The lens holder 423A may be configured to support at least one first lens 421A. The lens holder 423A may be configured to be coupled to the camera housing 410. In an embodiment of the disclosure, the lens holder 423A may be detachably coupled to the first lens housing 422A. In an embodiment not shown, the lens holder 423A may be formed integrally with the first lens housing 422A. The first lens assembly 420A may include a blocking wall 423B. The blocking wall 423B may at least partially block light passing through the first lens 421A and between a second lens 421B and a reflector 440A. The blocking wall 423B may be integrally and seamlessly formed with a lens holder 423A.

In an embodiment not shown, the camera module 400 may not include the first lens assembly 420A.

The camera module 400 may include a second lens assembly 420B (e.g., the lens assembly 210 of FIG. 2). The second lens assembly 420B may include at least one second lens 421B having the defined optical axis OA. A portion of the optical axis OA may be defined as a line connecting the center of curvature of a first surface of at least one second lens 421B and the center of curvature of an Nth surface (N is a natural number). The second lens assembly 420B may include a second lens housing 421B configured to accommodate at least one second lens 422B.

The camera module 400 may include a sensor assembly 430. The sensor assembly 430 may include an image sensor 431 (e.g., the image sensor 230 of FIG. 2) configured to convert an optical signal into an electrical signal. The sensor assembly 430 may include a connector 432 electrically connected to a processor (not shown) (e.g., the processor 120 of FIG. 1 and/or the ISP 260 of FIG. 2). The sensor assembly 430 may include a PCB 433 configured to transmit an electrical signal from the image sensor 431 to the connector 432. The PCB 433 may be electrically connected to the image sensor 431 and/or the connector 432. The PCB 433 may include an FPCB.

The camera module 400 may include a reflector 440 configured to reflect light. The reflector 440 may include an incident surface 440A onto which light is incident. For example, light passing through at least one first lens 421A may pass through the incident surface 440A. The reflector 440 may include an exit surface 440B through which light exits. For example, light passing through the exit surface 440B may be directed toward at least one second lens 421B. The reflector 440 may include at least one reflective surface 440C configured to reflect light passing through the incident surface 440A toward the exit surface 440B. The incident surface 440A, the exit surface 440B, and at least one reflective surface 440C may substantially define an effective optical path of the reflector 440. In an embodiment not shown, the reflector 440 may include a mirror having the reflective surface 440C.

The camera module 400 may include an auto-focus (AF) actuator 450. The AF actuator 450 may implement an AF operation (e.g., movement in an X-axis direction) of the second lens assembly 420B. The AF actuator 450 may include an AF carrier 451 configured to carry a second lens housing 422B. In the disclosure, the AF carrier 451 may also be referred to as a "lens carrier." The AF carrier 451 may be sized and shaped to accommodate the second lens housing 422B. The AF carrier 451 may be disposed on a base frame 410A.

The AF actuator 450 may include at least one AF magnet 452, which may also be referred to as an "electromagnetic element." At least one AF magnet 452 may be disposed in an area (e.g., a +/-Y direction side area or a recess thereof) of the AF carrier 451. The AF actuator 450 may include at least one AF coil 453, which may also be referred to as an "electromagnetic element." At least one AF coil 453 may be configured to be electromagnetically coupled to at least one AF magnet 452. At least one AF coil 453 may be disposed in an area (e.g., a +/-Y-direction area) of the side housing frame 410B. At least one AF coil 453 may be disposed in an area (e.g., a +/-Y-direction area) of a PCB 480.

The camera module 400 may include an optical image stabilization (OIS) actuator 460 (e.g., the image stabilizer 240 of FIG. 2). The OIS actuator 460 may rotate or tilt the reflector 440 about a pitch axis (e.g., a Y axis) and/or a yaw axis (e.g., a Z axis). The OIS actuator 460 may include an OIS carrier 461 configured to carry the reflector 440. The OIS carrier 461 may be sized and shaped to accommodate the reflector 440. The OIS carrier 461 may be disposed on the base frame 410A.

The OIS actuator 460 may include at least one first OIS magnet 462, which may also be referred to as an "electromagnetic element." At least one first OIS magnet 462 may be disposed in a first area (e.g., a substantially +/-Y-direction side area or a recess thereof) of the OIS carrier 461. The OIS actuator 460 may include at least one first OIS coil 463, which may also be referred to as an "electromagnetic element." At least one first OIS coil 463 may be configured to be electromagnetically coupled to at least one first OIS magnet 462. At least one first OIS coil 463 may be spaced apart in one direction (e.g., in the X-axis direction) from at least one AF coil 453 so as not to overlap at least one AF magnet 452 and may be disposed in an area (e.g., the +/-Y-direction area) of the side housing frame 410B. At least one first OIS coil 463 may be spaced apart from at least one AF coil 453 in one direction (e.g., in the X-axis direction) and may be disposed in an area (e.g., in the +/-Y-direction area) of the PCB 480. The electromagnetic coupling between the first OIS magnet 462 and the first OIS coil 463 may implement rotation of the OIS carrier 461 about the yaw axis (e.g., the Z axis).

The OIS actuator 460 may include at least one second OIS magnet 464, which may also be referred to as an "electromagnetic element." The OIS actuator 460 may include at least one second OIS coil 465, which may also be referred to as an "electromagnetic element." At least one second OIS coil 465 may be configured to be electromagnetically coupled to at least one second OIS magnet 464. At least one second OIS coil 465 may be disposed in an area (e.g., a +X-direction area) of the side housing frame 410B. At least one second OIS coil 465 may be spaced apart from at least one AF coil 453 in one direction (e.g., in the X-axis direction) and may be disposed in an area (e.g., in a +/-X-direction area) of the PCB 480.

The camera module 400 may include a first guide 470. The first guide 470 may include a guide body 471 and at least one first guide ball 472. The first guide body 471 may include at least one first inner groove configured to at least partially accommodate at least one first guide ball 472. For example, the first inner groove may extend along an inner surface of the first guide body 471 in a rotational direction about a Z-axis. The OIS carrier 461 may include at least one outer groove configured to at least partially accommodate at least one first guide ball 472. At least one outer groove of the OIS carrier 461 may extend along an outer surface of the OIS carrier 461 in the rotational direction about the Z-axis. The OIS carrier 461 may be configured to be in cloud contact with at least one first guide ball 472 and to rotate about the Z-axis by the first guide body 471.

The camera module 400 may include a second guide 473. A second guide body 474 and at least one second guide ball 475 may be included. The first guide body 471 may include at least one first outer groove configured to accommodate at least one second guide ball 475, and the second guide body 474 may include at least one second inner groove configured to accommodate at least one second guide ball 475. For example, at least one first outer groove may extend along an outer surface of the first guide body 471 in a rotational direction about a Y-axis, and at least one second inner groove may extend along an inner surface of the second guide body 474 in the rotational direction about the Y-axis. The first guide body 471 may be disposed between the OIS carrier 461 and the second guide body 474, and the second guide body 474 may be disposed in an area (e.g., the +X-direction area) of the side housing frame 410B. The first guide body 471 may be configured to be in cloud contact with at least one second guide ball 475 and to rotate about the Y-axis. The second guide body 474 may be fixed to the side housing frame 410B.

The camera module 400 may include a PCB 480. The PCB 480 may provide electrical connections to at least one AF coil 453, at least one first OIS coil 463, and at least one second OIS coil 465. These coils may be disposed on the PCB 480. The PCB 480 may include an FPCB. The PCB 480 may surround the side housing frames 410B.

The camera module 400 may include at least one stopper 485. The stopper 485 may reduce or prevent the second lens assembly 420B from moving beyond a predetermined movement range in a Z-axis direction due to an external impact. The stopper 485 may be disposed between the camera cover 411 and the second lens housing 422B.

The camera module 400 may include a first baffle 490A. The first baffle 490A, which may also be referred to as a "light blocking member," may be configured to control the flow of light. The first baffle 490A may reduce or suppress disturbance of an optical system caused by stray light from the camera module 400.

The first baffle 490A may include a base 491A and a plurality of first walls W1 disposed on the base 491A. The plurality of first walls W1 may be disposed on one surface (e.g., a -Z direction surface) of the base 491A. The plurality of first walls W1 may have a first wall surface T11 forming a first angle a11 with respect to one surface (e.g., the -Z direction surface) of the base 491A, and a second wall surface T12 forming a second angle a12 with respect to the surface (e.g., the -Z direction surface) of the base 491A. The size of the first angle a11 may be greater than that of the second angle a12. For example, the first angle a11 may be substantially about 90 degrees, and the second angle a12 may be an angle greater than 0 and less than about 90 degrees. Each second wall surface T12 among the plurality of first walls W1 may be oriented toward the image sensor 431. The plurality of first walls W1 may be arranged on the base 491A between one edge (e.g., an edge proximal to the second lens 421B) and an opposite edge (e.g., an edge distal to the second lens 421B).

At least a portion of the second wall surface T12 may include an etched area. For example, the etched area may be formed by a laser. At least a portion of the second wall surface T12 may include a substantially matte area. The second wall surface T12 may induce scattering of light reflected by the second wall surface T12.

The first baffle 490A may include at least one engagement tab 492A configured to engage the AF carrier 451. An engagement tab 492A may protrude in a predetermined direction (e.g., a -Z direction) from a side edge of the base 491A.

The camera module 400 may include a second baffle 490B. The second baffle 490B, which may also be referred to as a "light blocking member," may be configured to control the flow of light. The second baffle 490B may reduce or suppress disturbance of an optical system caused by stray light from the camera module 400.

The second baffle 490B may include a plurality of second walls W2. The plurality of second walls W2 may be arranged on the base frame 410A between the second lens 421B and the image sensor 431. The plurality of second walls W2 may have a third wall surface T21 forming a third angle a21 with respect to one surface (e.g., the +Z-direction surface) of the base frame 410A, and a fourth wall surface T22 forming a fourth angle a22 with respect to the surface (e.g., the +Z-direction surface) of the base frame 410A. The size of the third angle a21 may be greater than that of the fourth angle a22. For example, the third angle a21 may be substantially about 90 degrees, and the fourth angle a22 may be an angle greater than 0 and less than about 90 degrees. Each fourth wall surface T22 among the plurality of second walls W2 may be oriented toward the image sensor 431.

At least a portion of the fourth wall surface T22 may include an etched area. For example, the etched area may be formed by a laser. At least a portion of the fourth wall surface T22 may include a substantially matte area. The fourth wall surface T22 may induce scattering of light reflected by the fourth wall surface T22.

The second baffle 490B may be integrally and seamlessly formed with the base frame 410A. For example, the second baffle 490B and the base frame 410A may be manufactured as a single component by insert injection molding.

The second baffle 490B may be disposed between the second lens 421B and the image sensor 431. A flare phenomenon that may be caused by stray light between the image sensor 431 disposed in the camera housing 410 at a fixed position and the second lens 421B moving in a predetermined direction (e.g., the X-axis direction) with respect to the camera housing 410 may be suppressed.

The first baffle 490A and the second baffle 490B may be disposed substantially parallel to each other. The first baffle 490A and the second baffle 490B may be disposed opposite each other with respect to the optical axis OA. For example, the first baffle 490A may be positioned on a first side (e.g., a +Z-direction side) with respect to the second lens 421B, and the second baffle 490B may be positioned on a second side (e.g., a -Z-direction side) opposite the first side with respect to the second lens 421B. The first baffle 490A may be oriented in a first direction (e.g., the -Z direction), and the second baffle 490B may be oriented in a second direction opposite the first direction (e.g., a +Z direction). The disposition of the first baffle 490A and the second baffle 490B may effectively prevent a flare phenomenon by substantially suppressing stray light in both directions.

The first baffle 490A and the second baffle 490B may be separated from each other. The separation structure of the baffles may be advantageous in manufacturing the component compared to a structure (e.g., a frame structure) in which only one of the first baffle 490A and the second baffle 490B is provided.

The first baffle 490A and the second baffle 490B may at least partially overlap each other. For example, as illustrated in FIG. 8A, when the distance between the second lens assembly 420B and the image sensor 431 is a first distance (e.g., during macro photography), the first baffle 490A and the second baffle 490B may have an overlap area of a first size when viewed in a direction substantially orthogonal to the optical axis OA (e.g., in the Z-axis direction). As illustrated in FIG. 8B, when the distance between the second lens assembly 420B and the image sensor 431 is a second distance less than the first distance (e.g., during infinity photography), the first baffle 490A and the second baffle 490B may have an overlap area of a second size greater than the first size when viewed in a direction substantially orthogonal to the optical axis OA (e.g., in the Z-axis direction). The size of an overlap area between the first baffle 490A and the second baffle 490B may vary depending on movement of the AF carrier 451 in an AF stroke direction (e.g., in the X-axis direction). The size of the overlap area between the first baffle 490A and the second baffle 490B at a predetermined stroke position of the AF carrier 451 may be substantially 0, or no overlap may occur between the first baffle 490A and the second baffle 490B. The overlap structure of the baffles 490A and 490B may reduce or suppress flare that may appear on both sides (e.g., the first side (or the +Z-direction side) and the second side (or the -Z-direction side)) with respect to the image sensor 431.

The size of at least one first wall W1 among the plurality of first walls W1 may be less than the size of at least one second wall W2 among the plurality of second walls W2. For example, the height of the first wall W1 with respect to one surface (e.g., the -Z-direction surface) of the base 491A may be less than the height of the second wall W2 with respect to one surface (e.g., the +Z-direction surface) of the base frame 410A.

The surface area occupied by the first baffle 490A on the base 491A may be less than the surface area occupied by the second baffle 490B on the base frame 410A. By maximally using an available space between the second lens 421B and the image sensor 431, a flare phenomenon that may be caused by stray light between them may be effectively suppressed.

The angle of each inclined surface of the plurality of first walls W1 may be substantially the same as the angle of each inclined surface of the plurality of second walls W2. The angle of at least some of the inclined surfaces of the plurality of first walls W1 may be different (e.g., less or greater) from the angle of at least some of the inclined surfaces of the plurality of second walls W2.

The size of at least one first wall W1 may be less than that of at least one second wall W2. For example, the area of the first wall surface T11 may be less than the area of the third wall surface T21, and the area of the second wall surface T12 may be less than the area of the fourth wall surface T22.

A first distance between adjacent first walls W1 among the plurality of first walls W1 may be less than a second distance between adjacent second walls W2 among the plurality of second walls W2.

In an embodiment not shown, at least one first wall W1 and/or at least one second wall W2 may have a substantially trapezoidal cross-section. This allows molded resin to be smoothly extracted from a mold without substantial damage to the first wall W1 or the second wall W2 during manufacturing (e.g., injection molding) of the first baffle 490A and the second baffle 490B.

In an embodiment not shown, the camera module 400 may include a plurality of first baffles 490A. In an embodiment not shown, the camera module 400 may include a plurality of second baffles 490B.

In an embodiment not shown, the camera module 400 may include one or more baffles and/or blocking walls (e.g., blocking walls 423B) disposed between the first lens assembly 420A and the second lens assembly 420B.

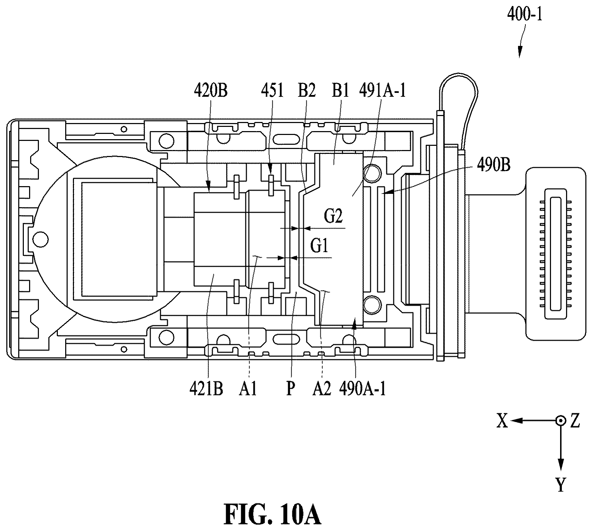

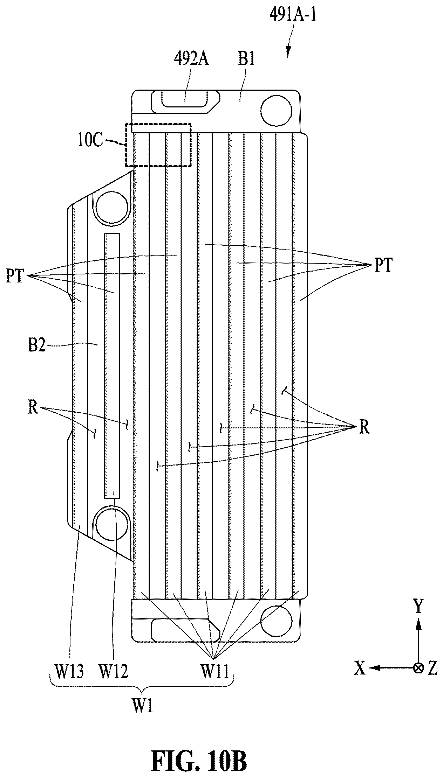

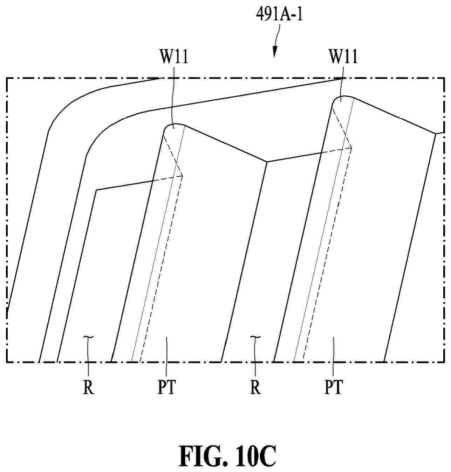

FIG. 10A is a plan view of a camera module according to an embodiment of the disclosure. FIG. 10B is a bottom view of a baffle according to an embodiment of the disclosure. FIG. 10C is an enlarged view of portion 10C of the baffle of FIG. 10B according to an embodiment of the disclosure.

Referring to FIGS. 10A, 10B, and 10C, a camera module 400-1 (e.g., the camera module 180 of FIGS. 1 and 2, the second camera module 380B and/or the third camera module 380D of FIGS. 3 and 4, and/or the camera module 400 of FIGS. 5, 6, 7, 8A, 8B, 9A, 9B, and 9C) may include the second lens assembly 420B, the AF carrier 451, a first baffle 490A-1 (e.g., the first baffle 490A of FIGS. 5, 6, 7, 8A, 8B, 9A, 9B, and 9C), and the second baffle 490B. The first baffle 490A-1 may include a base 491A-1 (e.g., the base 491A of FIGS. 5, 6, 7, 8A, 8B, 9A, 9B, and 9C). The first baffle 490A-1 may include a plurality of engagement tabs 492A (e.g., the engagement tabs 492A of FIG. 7). The first baffle 490A-1 may include the plurality of first walls W1.

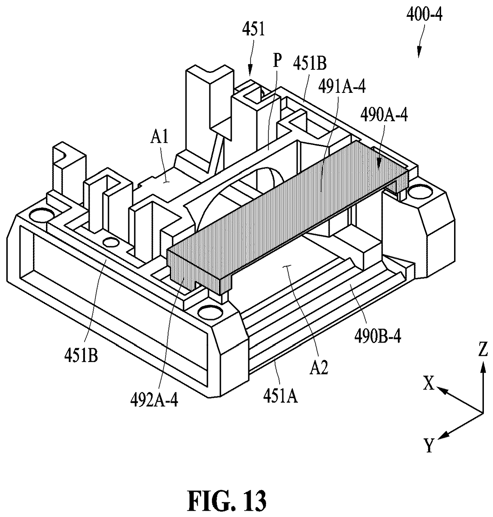

The AF carrier 451 may include a first area A1 and a second area A2 that are separated from each other. The first area A1 and the second area A2 may be at least partially defined by a base surface (e.g., a base surface 451A of FIG. 13) and side walls (e.g., side walls 451B of FIG. 13) of the AF carrier 451.

The AF carrier 451 may include a partition P that separates the first area A1 and the second area A2. The partition P may serve as a bridge connecting the side walls of the AF carrier 451. The partition P may be spaced apart from the base surface of the AF carrier 451.

The second lens assembly 420B may be disposed in the first area A1. The second lens housing 422B may be disposed close to the partition P to define a reduced first gap G1 between the second lens housing 422B and the partition P. In an embodiment not shown, the second lens housing 422B may at least partially contact the partition P such that no gap is formed between the second lens housing 422B and the partition P. The narrower the distance between the second lens housing 422B and the partition P, the less unwanted light may propagate between them.

The first baffle 490A-1 may be disposed in the second area A2. The base 491A-1 may be disposed close to the partition P to define a reduced second gap G2 between the base 491A-1 and the partition P. In an embodiment not shown, the base 491A-1 may at least partially contact the partition P such that no gap is formed between the base 491A-1 and the partition P. The narrower the distance between the base 491A-1 and the partition P, the less unwanted light may propagate between them.

The base 491A-1 may include a first portion B1 connected to the side walls of the AF carrier 451. The first portion B1 may have a first width (e.g., a Y-axis directional dimension) and a first length (e.g., a X-axis directional dimension). The base 491A-1 may include a second portion B2 seamlessly and integrally connected to the first portion B1. The second portion B2 may have a shape corresponding to the shape of the partition P. The second portion B2 may have a second width (e.g., the Y-axis directional dimension) that is less than the first width and a second length (e.g., the X-axis directional dimension) that is less than the first length. The second portion B2 may have the second width that is variable (e.g., decreasing) along the second length. The second gap G2 may be defined by the distance between the second portion B2 and the partition P.

The plurality of first walls W1 may include a plurality of first wall elements W11. The plurality of first wall elements W11 may be arranged in a predetermined direction (e.g., the X-axis direction) on one surface (e.g., the -Z direction surface) of the first portion B1. The plurality of first wall elements W11 may have substantially the same length (e.g., the Y-axis directional dimension). The distance between one adjacent pair of the first wall elements W11 may be substantially the same as the distance between another adjacent pair of the first wall elements W11.

The plurality of first walls W1 may include at least one second wall element W12. At least one second wall element W12 may be disposed on one surface (e.g., the -Z direction surface) of the second portion B2. At least one second wall element W12 may be disposed close to any one first wall elements W11. The length (e.g., the Y-axis directional dimension) of at least one second wall element W12 may be less than the length (e.g., the Y-axis directional dimension) of any one first wall element W11.

The plurality of first walls W1 may include at least one third wall element W13. At least one third wall element W13 may be disposed on one surface (e.g., the - Z direction surface) of the second portion B2. At least one third wall element W13 may be disposed close to at least one second wall element W12. At least one second wall element W12 may be disposed between the first wall element W11 and the third wall element W13. The distance between the first wall element W11 and the second wall element W12 may be substantially the same as the distance between the second wall element W12 and the third wall element W13. The length (e.g., the Y-axis directional dimension) of at least one third wall element W13 may be less than the length (e.g., the Y-axis directional dimension) of any one first wall element W11. The length (e.g., the Y-axis directional dimension) of at least one second wall element W12 may be greater than the length (e.g., the Y-axis directional dimension) of at least one third wall element W13.

The first baffle 490A-1 may include a plurality of protrusions PT. The first wall element W11, the second wall element W12 and the third wall element W13 may be implemented as protrusions PT. A protrusion PT may protrude in one direction (e.g., the -Z direction) of the first baffle 490A-1. The protrusion PT may have an apex that is substantially curved. The protrusion PT may have a width that decreases toward the apex in one direction (e.g., the -Z direction) of the first baffle 490A-1. At least one of the first wall element W11, the second wall element W12, or the third wall element W13 may have a predetermined shape (e.g., a sawtooth shape) at its distal end.

The first baffle 490A-1 may include a plurality of recesses R. A recess R may be formed in the first baffle 490A-1 in a direction (e.g., the +Z direction) opposite a protrusion direction (e.g., the -Z direction) of the protrusion PT. The recess R may be formed between a pair of adjacent protrusions PT.

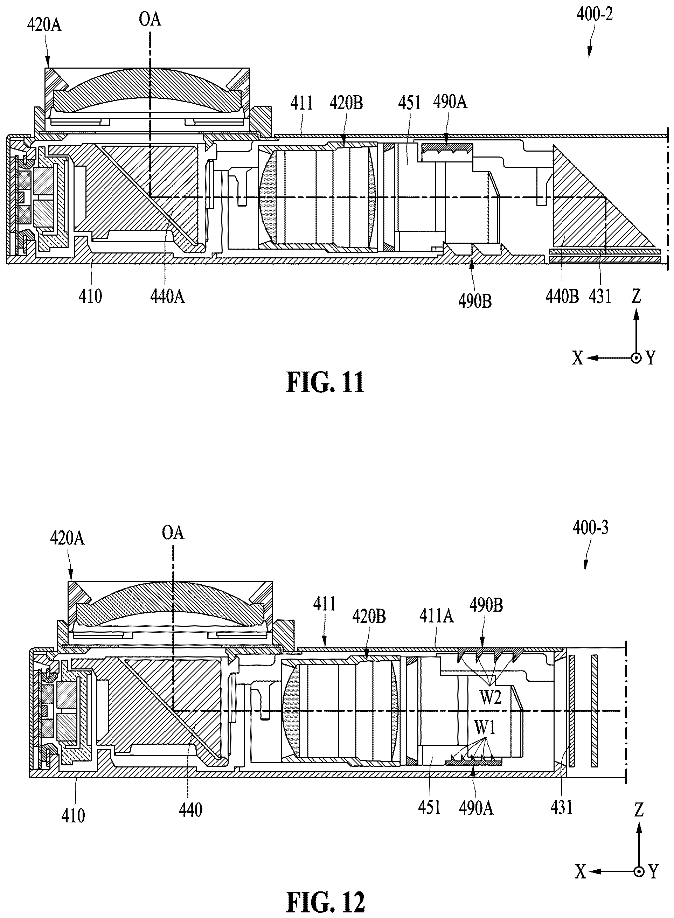

FIG. 11 is a cross-sectional view of a camera module according to an embodiment of the disclosure.

Referring to FIG. 11, a camera module 400-2 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, and/or the camera module 400-1 of FIGS. 10A, 10B, and 10C) may include the camera housing 410, the camera cover 411, the first lens assembly 420A, the second lens assembly 420B, the image sensor 431, and the AF carrier 451.

The camera module 400-2 may include a first reflector 440A (e.g., the reflector 440 of FIGS. 5, 6, 7, 8A, 8B, 9A, 9B, and 9C) configured to reflect light passing through the first lens assembly 420A toward the second lens assembly 420B. The first reflector 440A may be disposed between the first lens assembly 420A and the second lens assembly 420B.

The camera module 400-2 may include a second reflector 440B (e.g., the reflector 440 of FIGS. 5, 6, 7, 8A, 8B, 9A, 9B, and 9C) configured to reflect light passing through the second lens assembly 420B toward the image sensor 431. The second reflector 440B may be disposed between the second lens assembly 420B and the image sensor 431.

The optical axis OA may be defined by an optical path passing through the first lens assembly 420A, the first reflector 440A, the second lens assembly 420B, the second reflector 440B, and the image sensor 431.

The camera module 400-2 may include the first baffle 490A disposed between the second lens assembly 420B and the second reflector 440B and on the AF carrier 451. The camera module 400-2 may include the second baffle 490B disposed between the second lens assembly 420B and the second reflector 440B and in the camera housing 410. The first baffle 490A and the second baffle 490B may be disposed substantially parallel to each other along the optical path defined by the optical axis OA. The first baffle 490A and the second baffle 490B may reduce or prevent flare that may appear in an image by substantially blocking unwanted light paths between the second lens assembly 420B and the second reflector 440B.

FIG. 12 is a cross-sectional view of a camera module according to an embodiment of the disclosure.

Referring to FIG. 12, a camera module 400-3 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, and/or the camera module 400-2 of FIG. 11) may include the camera housing 410, the camera cover 411, the first lens assembly 420A, the second lens assembly 420B, the image sensor 431, the reflector 440, and the AF carrier 451. The optical axis OA may be defined by an optical path passing through the first lens assembly 420A, the reflector 440, the second lens assembly 420B, and the image sensor 431.

The camera module 400-3 may include the first baffle 490A including the plurality of first walls W1. The first baffle 490A may be disposed on the AF carrier 451.

The camera module 400-3 may include the second baffle 490B including the plurality of second walls W2. The second baffle 490B may be disposed on the camera cover 411 (e.g., a shield can). The plurality of second walls W2 may be arranged on one surface (e.g., the -Z direction surface) of the top frame 411A.

In an embodiment of the disclosure, the second baffle 490B may be integrally and seamlessly formed with the top frame 411A. For example, the second baffle 490B and the top frame 411A may be manufactured as a single component by insert injection molding.

In an embodiment of the disclosure, the second baffle 490B may be coupled to the top frame 411A as a separate component. For example, the second baffle 490B may be manufactured separately from the top frame 411A and bonded to the top frame 411A.

FIG. 13 is a perspective view of a carrier in a camera module according to an embodiment of the disclosure.

Referring to FIG. 13, a camera module 400-4 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, the camera module 400-2 of FIG. 11, and/or the camera module 400-3 of FIG. 12) may include the AF carrier 451. The AF carrier 451 may include a base surface 451A and a plurality of side walls 451B. The AF carrier 451 may include a partition P that separates the first area A1 and the second area A2.

The camera module 400-4 may include a first baffle 490A-4 (e.g., the first baffle 490A of FIGS. 5, 6, 7, 8A, 8B, 9A, 9B, and 9C, the first baffle 490A-1 of FIGS. 10A, 10B, and 10C, the first baffle 490A of FIG. 11, and/or the first baffle 490A of FIG. 12). The first baffle 490A-4 may include a base 491A-4 (e.g., the base 491A of FIGS. 5, 6, 7, 8A, 8B, 9A, 9B, and 9C) and a plurality of engagement tabs 492A-4 (e.g., the engagement tabs 492A of FIGS. 5, 6, 7, 8A, 8B, 9A, 9B, and 9C). The plurality of engagement tabs 492A-4 may be coupled to the side walls 451B. The first baffle 490A-4 may be positioned in the second area A2.

The camera module 400-4 may include a second baffle 490B-4 (e.g., the second baffle 490B of FIGS. 5, 6, 7, 8A, 8B, 9A, 9B, and 9C, the second baffle 490B of FIGS. 10A, 10B, and 10C, the second baffle 490B of FIG. 11, and/or the second baffle 490B of FIG. 12). The second baffle 490B-4 may be disposed on the base surface 451A. The second baffle 490B-4 may be integrally and seamlessly formed with the base surface 451A. The second baffle 490B-4 may be positioned in the second area A2.

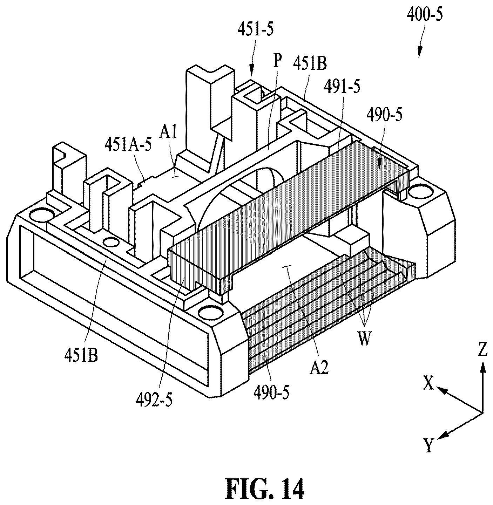

FIG. 14 is a perspective view of a carrier in a camera module according to an embodiment of the disclosure.

Referring to FIG. 14, a camera module 400-5 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, the camera module 400-2 of FIG. 11, the camera module 400-3 of FIG. 12, and/or the camera module 400-4 of FIG. 13) may include an AF carrier 451-5. The AF carrier 451-5 may include a base surface 451A-5 (e.g., the base surface 451A of FIG. 13) and the plurality of side walls 451B. The AF carrier 451-5 may include a partition P that separates the first area A1 and the second area A2. The base surface 451A-5 may be formed at least partially in the first area A1.

The camera module 400-5 may include a plurality of baffles 490-5 (e.g., the first baffle 490A of FIGS. 5, 6, 7, 8A, 8B, 9A, 9B, and 9C, the first baffle 490A-1 of FIGS. 10A, 10B, and 10C, the first baffle 490A of FIG. 11, the first baffle 490A of FIG. 12, and/or the first baffle 490A-4 of FIG. 13). Each baffle 490-5 may include a base 491-5 (e.g., the base 491A of FIGS. 5, 6, 7, 8A, 8B, 9A, 9B, and 9C, and/or the base 491A-4 of FIG. 13) and a plurality of engagement tabs 492-5 (e.g., the engagement tabs 492A of FIGS. 5, 6, 7, 8A, 8B, 9A, 9B, and 9C and/or the engagement tabs 492A-4 of FIG. 13).

The plurality of baffles 490-5 may be disposed substantially parallel to each other. For example, a direction in which a plurality of walls W (e.g., the first wall W1 of FIGS. 5, 6, 7, 8A, 8B, 9A, 9B, and 9C) of one baffle 490-5 are oriented may be opposite a direction in which a plurality of walls W (e.g., the first wall W1 of FIGS. 5, 6, 7, 8A, 8B, 9A, 9B, and 9C) of another baffle 490-5 are oriented.

The plurality of baffles 490-5 may be positioned in the second area A2. In an example, the base surface 451A-5 may not be formed in the second area A2, but a plurality of baffles 490-5 positioned in the second area A2 may block stray light that may occur in the second area A2. The plurality of engagement tabs 492-5 of one baffle 490-5 may be coupled to a first side (e.g., the +Z direction side) of the side walls 451B, and the plurality of engagement tabs 492-5 of another baffle 490-5 may be coupled to a second side (e.g., the -Z direction side) of the side walls 451B opposite the first side.

The plurality of baffles 490-5 may have substantially the same shape, size, and/or material. For example, the plurality of baffles 490-5 may include a base 491-5 and a plurality of engagement tabs 492-5 having the same shape, size, and/or material. The walls W of each of the plurality of baffles 490-5 may have the same shape, size, material, and/or spacing.

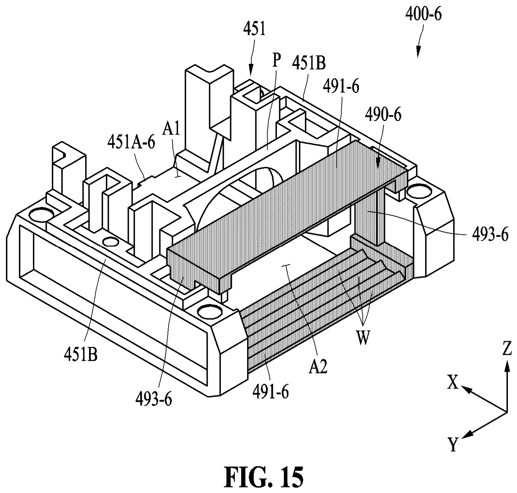

FIG. 15 is a perspective view of a carrier in a camera module according to an embodiment of the disclosure.

Referring to FIG. 15, a camera module 400-6 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, the camera module 400-2 of FIG. 11, the camera module 400-3 of FIG. 12, the camera module 400-4 of FIG. 13, and/or the camera module 400-5 of FIG. 14) may include the AF carrier 451. The AF carrier 451 may include a base surface 451A-6 (e.g., the base surface 451A of FIG. 13 and/or the base surface 451A-5 of FIG. 14) and a plurality of side walls 451B. The AF carrier 451 may include a partition P that separates the first area A1 and the second area A2. The base surface 451A-6 may be formed at least partially in the first area A1.

The camera module 400-6 may include an integrated baffle structure 490-6 in which a plurality of baffles (e.g., the first baffle 490A of FIGS. 5, 6, 7, 8A, 8B, 9A, 9B, and 9C, the first baffle 490A-1 of FIGS. 10A, 10B, and 10C, the first baffle 490A of FIG. 11, the first baffle 490A of FIG. 12, the first baffle 490A-4 of FIG. 13, and/or the baffle 490-5 of FIG. 14) are integrally and seamlessly formed with each other. The integrated baffle structure 490-6 may include a plurality of bases 491-6 disposed opposite to each other (e.g., the base 491A of FIGS. 5, 6, 7, 8A, 8B, 9A, 9B, and 9C, the base 491A-4 of FIG. 13, and/or the base 491-5 of FIG. 14), and a plurality of engagement sides 493-6 connecting the plurality of bases 491-6. The plurality of engagement sides 493-6 may be coupled to corresponding side walls 451B. The plurality of walls W (e.g., the first wall W1 of FIGS. 5, 6, 7, 8A, 8B, 9A, 9B, and 9C, and/or the walls W of FIG. 14) may be formed on the respective bases 491-6. In an embodiment of the disclosure, the plurality of walls W may not be formed on the engagement sides 493-6. In an embodiment of the disclosure, the plurality of walls W may be formed on the engagement sides 493-6. In an embodiment of the disclosure, the base surface 451A-6 may not be formed in the second area A2, but the integrated baffle structure 490-6 positioned in the second area A2 may block stray light that may occur in the second area A2.

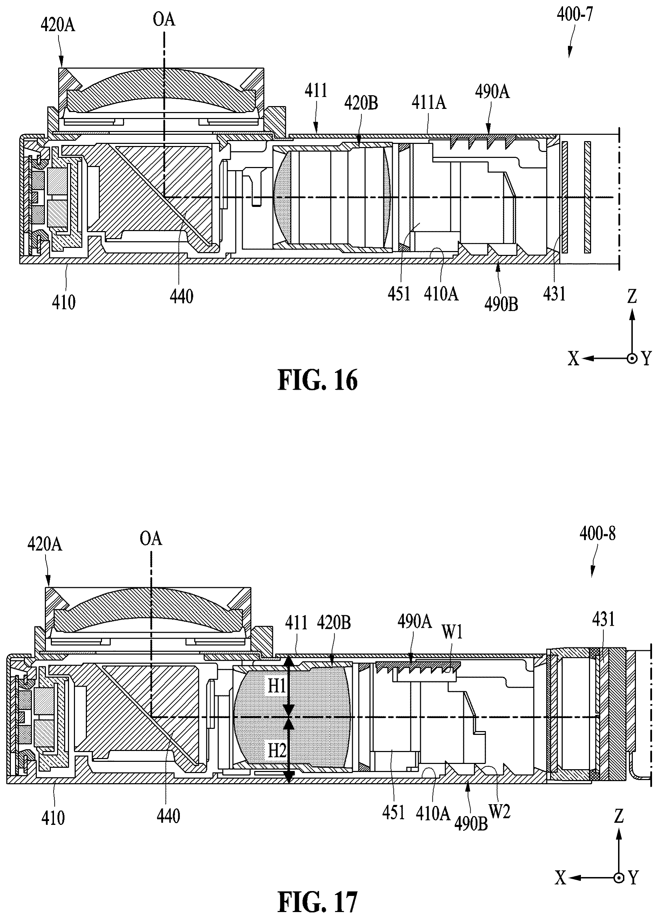

FIG. 16 is a cross-sectional view of a camera module according to an embodiment of the disclosure.

Referring to FIG. 16, a camera module 400-7 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, the camera module 400-2 of FIG. 11, the camera module 400-3 of FIG. 12, the camera module 400-4 of FIG. 13, the camera module 400-5 of FIG. 14, and/or the camera module 400-6 of FIG. 15) may include the camera housing 410, the camera cover 411, the first lens assembly 420A, the second lens assembly 420B, the image sensor 431, the reflector 440, the AF carrier 451, the first baffle 490A, and the second baffle 490B. The optical axis OA may be defined by an optical path passing through the first lens assembly 420A, the reflector 440, the second lens assembly 420B, and the image sensor 431. The first baffle 490A may be disposed on the top frame 411A of the camera cover 411. The second baffle 490B may be disposed on the base frame 410A of the camera housing 410 substantially parallel to the first baffle 490A. In an embodiment not shown, the camera module 400-7 may include at least one baffle or an integrated baffle structure disposed on the AF carrier 451.

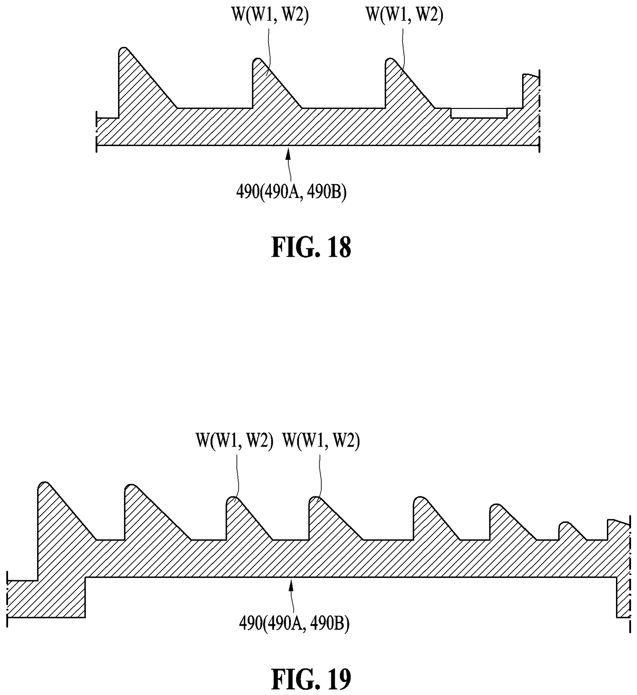

FIG. 17 is a cross-sectional view of a camera module according to an embodiment of the disclosure. FIG. 18 is a cross-sectional view of a baffle according to an embodiment of the disclosure. FIG. 19 is a cross-sectional view of a baffle according to an embodiment of the disclosure.

Referring to FIGS. 17, 18, and 19, a camera module 400-8 (e.g., the camera module 180 of FIGS. 1 and 2, the second camera module 380B and/or the third camera module 380D of FIGS. 3 and 4, the camera module 400 of FIGS. 5, 6, 7, FIGS. 8A, 8B, 9A, 9B, and 9C, the camera module 400-1 of FIGS. 10A, 10B, and 10C, the camera module 400-2 of FIG. 11, the camera module 400-3 of FIG. 12, the camera module 400-4 of FIG. 13, the camera module 400-5 of FIG. 14, the camera module 400-6 of FIG. 15, and/or the camera module 400-7 of FIG. 16) may include the camera housing 410, the camera cover 411, the first lens assembly 420A, the second lens assembly 420B, the image sensor 431, the reflector 440, the AF carrier 451, the first baffle 490A, and the second baffle 490B. The optical axis OA may be defined by an optical path passing through the first lens assembly 420A, the reflector 440, the second lens assembly 420B, and the image sensor 431.

The first baffle 490A may include the plurality of first walls W1. The second baffle 490B may include a plurality of second walls W2.

The first baffle 490A may be disposed on the AF carrier 451. The first baffle 490A may be positioned outside an effective optical path of the second lens assembly 420B and outside an effective optical path area of the image sensor 431. The second baffle 490B may be disposed on the base frame 410A of the camera housing 410 substantially parallel to the first baffle 490A.

Referring to FIG. 18, when the walls W (e.g., the first wall W1 and/or the second wall W2) of baffles 490 (e.g., the first baffle 490A and/or the second baffle 490B) have a relatively large height, the distance between adjacent walls W may increase relative to when the walls W have a relatively low height (e.g., FIG. 19). Meanwhile, as illustrated in FIG. 19, when the walls W have a relatively low height, the number of walls W may increase, and the distance between adjacent walls W may decrease compared to when the walls W have a relatively large height (e.g., FIG. 18). As such, the height of the walls W may be inversely proportional to the number of walls W.

Referring to FIG. 17, the height of the camera module 400-8 may be defined as the sum of a distance H1 between the optical axis OA and the top frame 411A and a distance H2 between the optical axis OA and the base frame 410A. The height (e.g., the Z-axis directional dimension) of the effective optical path area of the second lens assembly 420B and the height (e.g., the Z-axis directional dimension) of the effective optical path area of the image sensor 431 may be substantially symmetric with respect to the optical axis OA.

Meanwhile, portions corresponding to the distances H1 and H2 in the camera module 400-8 may not be symmetric with respect to the optical axis OA. In an embodiment in which the distance H1 is less than the distance H2, the first baffle 490A is disposed in a relatively smaller space and the second baffle 490B is disposed in a relatively larger space. Accordingly, to block an optical path that may cause a flare phenomenon, the height of the first wall W1 may be less than the height of the second wall W2, the distance between adjacent first walls W1 may be less than the distance between adjacent second walls W2, and the number of first walls W1 may be greater than the number of second walls W2. However, without being limited to the illustrated embodiment of the disclosure, depending on the arrangement of the camera module 400-8, the height of the first wall W1 may be substantially the same as or greater than the height of the second wall W2, the distance between adjacent first walls W1 may be substantially the same as or greater than the distance between adjacent second walls W2, and the number of first walls W1 may be the same as or less than the number of second walls W2.

In the embodiments illustrated in FIGS. 18 and 19, the height of at least one first wall W1 among the plurality of first walls W1 may be different from the height of at least one other first wall W1. The height of at least one second wall W2 among the plurality of second walls W2 may be different from the height of at least one other second wall W2. In an embodiment not shown, the plurality of first walls W1 may have substantially the same height. The plurality of second walls W2 may have substantially the same height.

Meanwhile, any embodiment of one baffle described in the disclosure may be combined with any embodiment of another baffle described herein. For example, an embodiment of the AF carrier 451 including a plurality of baffles 490A-4, 490B-4, 490-5, and 490-6 as illustrated in FIGS. 13 to 15, and an embodiment of the camera module including a plurality of baffles 490A and 490B as illustrated in FIG. 16 may be implemented.

One aspect of the disclosure may provide a camera module that reduces or suppresses flare and an electronic device including the camera module.

The camera module 400 may include the camera housing 410, a lens carrier 451 configured to move a lens 421B along an optical axis OA of the lens 421B, and an image sensor 431 configured to receive light passing through the lens 421B. The camera module 400 may include a first baffle 490A disposed on a portion of the lens carrier 451. The camera module 400 may include a second baffle 490B. The second baffle 490B may be disposed parallel to the first baffle 490A. The second baffle 490B may be disposed on an inner portion of the camera housing 410 between the lens 421B and the image sensor 431.

The first baffle 490A may be disposed on the portion of the lens carrier 451. The first baffle 490A may face the second baffle 490B.

The first baffle 490A may include a plurality of first walls W1. The second baffle 490B may include a plurality of second walls W2.

A size of at least one first wall W1 among the plurality of first walls W1 may be less than a size of at least one second wall W2 among the plurality of second walls W2.

A first distance between adjacent first walls W1 among the plurality of first walls W1 may be less than a second distance between adjacent second walls W2 among the plurality of second walls W2.

One of the plurality of first walls W1 may be longer than another one of the plurality of first walls W1.

At least one of the first walls W1 or the second walls W2 may include a plurality of protrusions PT on a top side of the first walls W1 or the second walls W2.

A section of at least some of the first walls W1 may include a first side toward the lens 421B, a second side toward the image sensor 431, and a bottom side, and may be substantially triangular. A first angle between the first side and the bottom side may be greater than a second angle between the second side and the bottom side.

A surface area of the first baffle 490A may be less than a surface area of the second baffle 490B.

When viewed in a direction substantially orthogonal to the optical axis OA of the lens 421B, the first baffle 490A may at least partially overlap the second baffle 490B.

The camera module 400 may include an additional lens 421A. The camera module 400 may include a third baffle disposed between the lens 421B and the additional lens 421A.

The camera module 400 may further include a first reflector 440A disposed between the additional lens 421A and the lens 421B. The additional lens 421A may be disposed on an outer portion of the camera housing 410. A portion of the optical axis OA of the additional lens 421A may be substantially orthogonal to a portion of the optical axis OA of the lens 421B.

The camera module 400 may further include a second reflector 440B disposed between the lens 421B and the image sensor 431. The image sensor 431 and the second baffle 490B may be disposed on the same side of the camera housing 410. A portion of the optical axis OA of the lens 421B may be parallel to the image sensor 431.

The lens carrier 451 may include a first area A1 in which the lens 421B is disposed. The lens carrier 451 may include a second area A2 in which the first baffle 490A-1 is disposed. The lens carrier 451 may include a partition P that separates the first area A1 and the second area A2.

The first baffle 490A-1 extends toward the partition P. The first baffle 490A-1 may form a reduced gap G2 between the first baffle 490A-1 and the partition P. The first baffle 490A-1 may form substantially no gap between the first baffle 490A-1 and the partition P.

The camera housing 410 may include a shield can. The second baffle 490B may be disposed on an inner portion of the shield can.

The camera module 400-4 may include a fourth baffle 490B-4 disposed on another portion of the lens carrier 451 opposite to the first baffle 490A-4.

The first baffle 490A-4 and the fourth baffle 490B-4 may have substantially the same shape, size, and/or material.

The camera module 400 may include a fifth baffle 490A disposed on another inner portion of the camera housing 410 opposite to the second baffle 490B.

The camera module 400 may include an additional lens 421A, a reflector 440 configured to reflect light passing through the additional lens 421A toward the lens 421B, and a blocking wall 423B configured to block light passing through the additional lens 421A from passing through between the reflector 440 and the lens 421B.

An electronic device 301 may include a camera module 400.

In an embodiment of the disclosure, flare may be reduced or suppressed without increasing the size of a camera module. The effects of the camera module and the electronic device including the same according to an embodiment may not be limited to the above-mentioned effects, and other unmentioned effects may be clearly understood from the following description by one of ordinary skill in the art.

The embodiments of the present disclosure are intended to be illustrative and not restrictive. Various modifications may be made to the detailed description of the disclosure including the accompanying scope of claims and equivalents. Any of the embodiment(s) described herein may be used in combination with any other embodiment(s) described herein.

## Claims

1. A camera module (400) comprising:
a housing (410);
a lens carrier (451) configured to move a lens (421B) along an optical axis (OA) of the lens (421B);
an image sensor (431) configured to receive light passing through the lens (421B);
a first baffle (490A) disposed on a portion of the lens carrier (451); and
a second baffle (490B) disposed parallel to the first baffle (490A) and disposed on an inner portion of the housing (410) between the lens (421B) and the image sensor (431).

2. The camera module of claim 1, wherein the first baffle (490A) is disposed on the portion of the lens carrier (451) such that the first baffle (490A) faces the second baffle (490B).

3. The camera module of claim 1 or 2,
wherein the first baffle (490A) comprises a plurality of first walls (W1), and
wherein the second baffle (490B) comprises a plurality of second walls (W2).

4. The camera module of claim 3,
wherein a size of at least one first wall (W1) among the plurality of first walls (W1) is less than a size of at least one second wall (W2) among the plurality of second walls (W2),
wherein, preferably, a first distance between adjacent first walls (W1) among the plurality of first walls (W1) is less than a second distance between adjacent second walls (W2) among the plurality of second walls (W2), and
wherein, preferably, one of the plurality of first walls (W1) is longer than another one of the plurality of first walls (W1).

5. The camera module of claim 3 or 4, wherein at least one of the first walls (W1) or the second walls (W2) comprises a plurality of protrusions (PT) on a top side of the first walls (W1) or the second walls (W2).

6. The camera module of any one of claims 3 to 5,
wherein a section of at least some of the first walls (W1) comprises:
a first side toward the lens (421B),
a second side toward the image sensor (431), and
a bottom side, and is substantially triangular, and
wherein a first angle between the first side and the bottom side is greater than a second angle between the second side and the bottom side.

7. The camera module of any one of claims 1 to 6, wherein a surface area of the first baffle (490A) is less than a surface area of the second baffle (490B).

8. The camera module of any one of claims 1 to 7, wherein, when viewed in a direction substantially orthogonal to the optical axis (OA) of the lens (421B), the first baffle (490A) at least partially overlaps the second baffle (490B).

9. The camera module of any one of claims 1 to 8, further comprising:
an additional lens (421A); and
a third baffle disposed between the lens (421B) and the additional lens (421A),
wherein, preferably, further comprising a first reflector disposed between the additional lens (421A) and the lens (421B),
wherein the additional lens (421A) is disposed on an outer portion of the housing (410),
wherein a portion of the optical axis (OA) of the additional lens (421A) is substantially orthogonal to a portion of the optical axis (OA) of the lens (421B),
wherein, preferably, further comprising a second reflector (440B) disposed between the lens (421B) and the image sensor (431), and
wherein the image sensor (431) and the second baffle (490B) are disposed on the same side of the housing (410) such that a portion of the optical axis (OA) of the lens (421B) is parallel to the image sensor (431).

10. The camera module of any one of claims 1 to 9, wherein the lens carrier (451) comprises:
a first area (A1) in which the lens (421B) is disposed;
a second area (A2) in which the first baffle (490A-1) is disposed; and
a partition (P) that separates the first area (A1) and the second area (A2),
wherein, preferably, the first baffle (490A-1) extends toward the partition (P) to form a reduced gap (G2) between the first baffle (490A-1) and the partition (P) or to form substantially no gap between the first baffle (490A-1) and the partition (P).

11. The camera module of any one of claims 1 to 10,
wherein the housing (410) comprises a shield can, and
wherein the second baffle (490B) is disposed on an inner portion of the shield can.

12. The camera module of any one of claims 1 to 11, further comprising:
a fourth baffle (490B-4) disposed on another portion of the lens carrier (451) opposite to the first baffle (490A-4); and
preferably, the first baffle (490A-4) and the fourth baffle (490B-4) have substantially the same shape, size, and/or material.

13. The camera module of any one of claims 1 to 12, further comprising:
a fifth baffle (490A) disposed on another inner portion of the housing (410) opposite to the second baffle (490B).

14. The camera module of any one of claims 1 to 13, further comprising:
an additional lens (421A);
a reflector (440) configured to reflect light passing through the additional lens (421A) toward the lens (421B); and
a blocking wall (423B) configured to block light passing through the additional lens (421A) from passing through between the reflector (440) and the lens (421B).
